# EUROPEAN PATENT SPECIFICATION

(11) **EP 1 249 803 B1**
(45) Date of publication and mention of the grant of the patent: **17.06.2015**
(21) Application number: 02007733.5
(22) Date of filing: 05.04.2002
(51) Int. Cl.: G07G 1/14, G06Q 20/20

(54) **POS system**
Verkaufsstellensystem
Système de point de vente

(30) Priority: 10.04.2001 JP 2001111803
(43) Date of publication of application: 16.10.2002
(73) Proprietor: Seiko Epson Corporation, Tokyo 163-0811 (JP)
(72) Inventor: Nobutani, Tsutomu, Suwa-shi, Nagano-ken 392-8502 (JP); Hoshina, Masaki, Suwa-shi, Nagano-ken 392-8502 (JP); Kimura, Tamotsu, Suwa-shi, Nagano-ken 392-8502 (JP)
(74) Representative: MERH-IP Matias Erny Reichl Hoffmann

(56) References cited:
- EP-A- 0 809 174
- EP-A- 0 893 789
- EP-A- 0 930 590
- EP-A- 1 018 714
- US-A- 4 502 120
- US-A- 5 253 345
- US-A- 5 895 452
- PATENT ABSTRACTS OF JAPAN vol. 1995, no. 10, 30 November 1995 (1995-11-30) & JP 07 186464 A (NEC CORP), 25 July 1995 (1995-07-25)
- PATENT ABSTRACTS OF JAPAN vol. 1995, no. 10, 30 November 1995 (1995-11-30) & JP 07 175613 A (SEIKO EPSON CORP), 14 July 1995 (1995-07-14)
- PATENT ABSTRACTS OF JAPAN vol. 1996, no. 12, 26 December 1996 (1996-12-26) & JP 08 212463 A (TEC CORP), 20 August 1996 (1996-08-20)
- PATENT ABSTRACTS OF JAPAN vol. 1997, no. 07, 31 July 1997 (1997-07-31) & JP 09 064899 A (HITACHI CABLE LTD), 7 March 1997 (1997-03-07)

## Description

The present invention relates to POS systems.

Multiple POS terminals each comprising a host controller, input device, display device, and printer are typically connected via a LAN (local area network) or other wired or wireless network architecture to create a POS system. Once a POS system is assembled it can be reconfigured to create an even better POS system as needs and conditions change. Reconfiguring a POS system, that is, changing the configuration of components in a POS system, is, however, not easy, and changing the configuration of a deployed system already in use is even more difficult.

A POS system can be initially built as an extensible system so that the system configuration can later be changed, anticipating the need for additional POS terminals and configuration changes of the POS terminals. However, assuring the ability to reconfigure the POS system creates problems such as wasted installation space and requiring more time to develop and build the system. Furthermore, adding a new POS terminal to an existing POS system requires temporarily shutting down the entire system and changing the LAN or other network connections. Modifying a system is therefore both time consuming and costly.

Connecting a wireless communication (WC) module to the host controller of a POS terminal so that wireless communication can be used instead of a physical (wired) connection to the network (LAN) is one potential solution, but the added WC module then occupies a physical port. This also requires either modifying the host controller to connect the WC module or replacing the host controller with a host controller having a WC module. A problem with this is that it is also necessary to change the host controller software or make other system-wide changes. Further time and money is therefore also needed to make such system-wide changes.

Yet another problem is that communication performance varies with the location of the antenna of the WC module, and finding the ideal antenna location is not easy.

EP 0 893789 A1 discloses a POS system according to the pre-characterizing portion of claim 1. In this prior art the master printer comprises a CPU oparable, in response to a respective command form the external host, in one of three different modes, a print mode, an outpit through and an input through mode. In the print mode, the CPU executes a predetermined signal processing (including code interpretation, dot developing and the like) of the print data supplied by the external host H, and has a printing unit print the data. In the output through mode, the CPU receives data transmitted from the external host via the input/output unit, and transmits the data to the peripheral device via the master communication unit. In the input through mode, the CPU receives data transmitted from the peripheral device via the master communication unit, and transmits the data to the external host H via the input/output unit. In one embodiment, multiple master communication units are provided each allowing communication with a respective peripheral device. In the output through mode the CPU selects one of the multiple master communication units based on destination data added received from the host.

It is an object of the present invention to provide a POS system that can be easily reconfigured without involving the above problems.

This object is achieved by a POS system as claimed in claim 1. Preferred embodiments of the invention are subject-matter of the dependent claims.

The present invention may be applied to existing POS systems without requiring the host controller of an existing POS terminal to be reconfigured or even replaced. Instead, only the printer physically connected to the host controller of an existing POS terminal need by replaced with a master printer having a WC module in accordance with this invention. By thus making an existing POS terminal become a master terminal and then adding a POS slave terminal also having a WC module and being wirelessly connected to an associated master terminal, the host controller of the master terminal can control the slave terminal. It is therefore not necessary to use new host controllers to extend an existing POS system, rather the existing host controllers can be used.

The effects of noise can be reduced by passing wiring for the antenna of the WC module inside a metal pillar supporting the display device of the POS terminal, and locating the antenna on top of the display device, on the pillar, or other high location less affected by obstructions. The best location for the antenna of the WC module can be easily found by displaying the communication status of the WC module on the display device.

Other objects and attainments together with a fuller understanding of the invention will become apparent and appreciated by referring to the following description of preferred embodiments taken in conjunction with the accompanying drawings, in which:
- Fig. 1: shows a POS system in accordance with the present invention;
- Fig. 2: is a function block diagram of a host terminal and a slave terminal used in the POS system of Fig. 1;
- Fig. 3: is a flow chart of a display process whereby the host controller of the host terminal displays information on the display device of the slave terminal;
- Fig. 4: is a flow chart of an input process by which a host controller in the master terminal receives input from the input device of the slave terminal;
- Fig. 5: is a function block diagram of data switch unit of the printer according to the present Invention;
- Fig. 6: is a flow chart of a control process of the data switch unit;
- Fig. 7: shows display devices;
- Fig. 8: is a flow chart of the communication state display process in the received data processing function; and
- Fig. 9: shows a POS system equipped with an interface board according to the present invention.

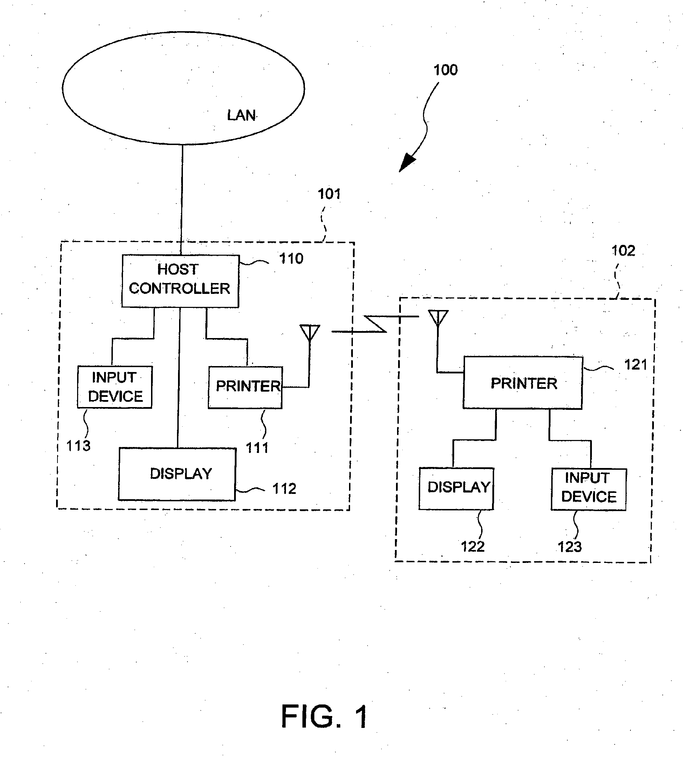

Fig. 1 shows a typical POS system 100 in accordance with the present invention. The POS system shown in Fig. 1 comprises one or more terminals 101, referred to as "master terminals" hereinafter, and one or more terminals 102, referred to as "slave terminals" hereinafter. Multiple POS terminals may be connected to a LAN or other network via wired (physical) or wireless connection. The slave terminal 102 is connected to an associated master terminal by means of a wireless communication (WC) link.

Master terminal 101 typically has a host controller 110 for running transaction processes and other POS application software, a printer 111 for printing receipts, for example, a display 112 for displaying product price information etc., and one or more input devices 113 such as a keyboard and scanner. Printer 111, display 113 and input device(s) 113 are physically connected to the host controller 110 (wired connections). The slave terminal 102 typically has a printer 121 to which a display 122 and an input device 123 are physically connected.

In accordance with the present invention, printer 111 connected to host controller 110 and printer 121 of slave terminal 102 are both equipped with a WC module to establish the WC link between the two terminals 101 and 102.

Based on control instructions from the application program executed by the host controller 110, the printer 121 of the slave terminal 102 can be controlled and information can be displayed on the display 122 using the WC link. Information input at the input device 123 can be sent to the host controller 110 also using the WC link.

Hence, a POS system according to the present invention has a first (host) POS terminal and a second (slave) POS terminal. The first POS terminal has a host controller for performing the functions of one or multiple POS software applications, and a first printer controlled by the host controller to which the first printer is connected through a wired (physical) connection port. The second POS terminal has a separate second printer from the first printer and controlled by the host controller via a WC link.

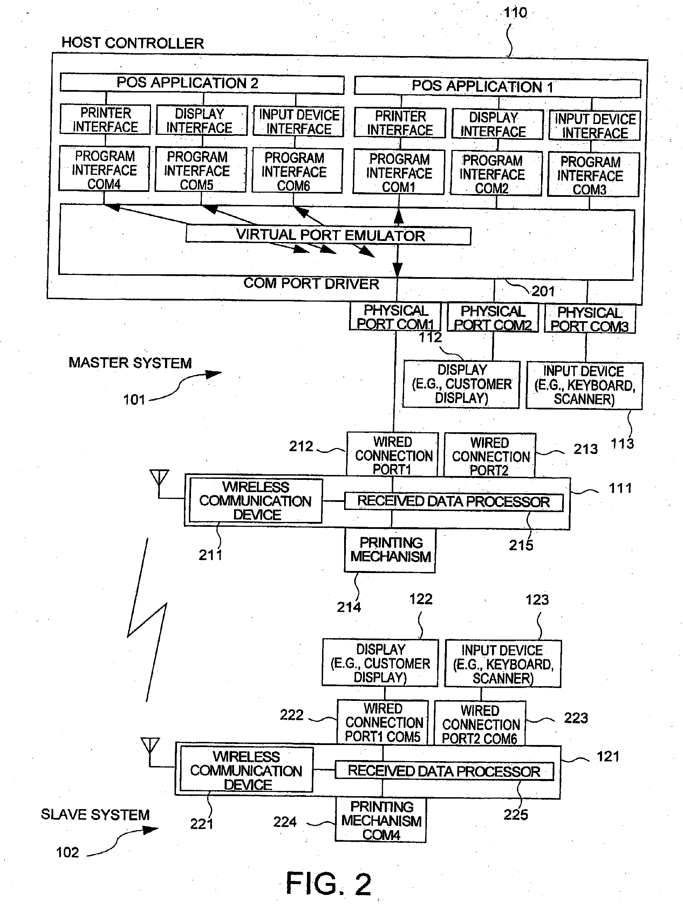

The operation of the host terminal 101 and the slave terminal 102 in the POS system shown in Fig. 1 is described below with reference to Fig. 2, Fig. 3, and Fig. 4.

Fig. 2 is a function block diagram of the host terminal and the slave terminal. Outputting display data on the display 122 of the slave terminal 102 based on control instructions from a POS application 2, a software application run on the host controller 110 of the host terminal 101, is described below by way of example. The connection port of the display device 122 specified by the POS application 2 is assumed below to be COM5, which is not one of the physical connection ports of the host controller 110. This type of non-physical port is referred to below as a "virtual port."

The printer 111 has a WC module 211, a first wired connection port 212 for physical connection to the host controller 110, a second wired connection port 213, a printing unit 214 for producing hard copies, and a data switch unit 215 for receiving data and redirecting the received data to the appropriate one of the WC module 211, connection port 212 or 213, and printing unit 214.

The printer 121 has a WC module 221, a first wired connection port 222 to which display 122 is physically connected, a second wired connection port 223 to which input device 123 is physically connected, printing unit 224 for producing hard copies, and a data switch unit 225 for receiving data and redirecting the received data to the appropriate one of the WC module 221, connection port 222 or 223, and printing unit 224.

When the virtual port emulator 201 receives a display output request from the POS application 2, it finds identification (ID) information for the wired connection port 222 of the printer 121 in the slave terminal 102 linked to the virtual port COM5, attaches the found information as an "address" (destination data) to the display data received from the POS application and sends the resulting data stream through physical port COM1 to the printer 111.

The digital data received through the connection port 212 of printer 111 is then applied to data switch unit 215 which selects, based on the address included in the data stream, WC module 221 as the appropriate destination. The data stream is thus sent to the printer 121 of slave terminal 102. The data stream received by the WC module 221 of printer 121 is then passed to data switch unit 225 which, based on the address included in the data stream, sends the data through the connection port 222 to the display 122. The display 122 then presents the display data from the POS application 2.

It will thus be apparent that the slave terminal can be controlled by the host controller of the host terminal using printers equipped with a WC module.

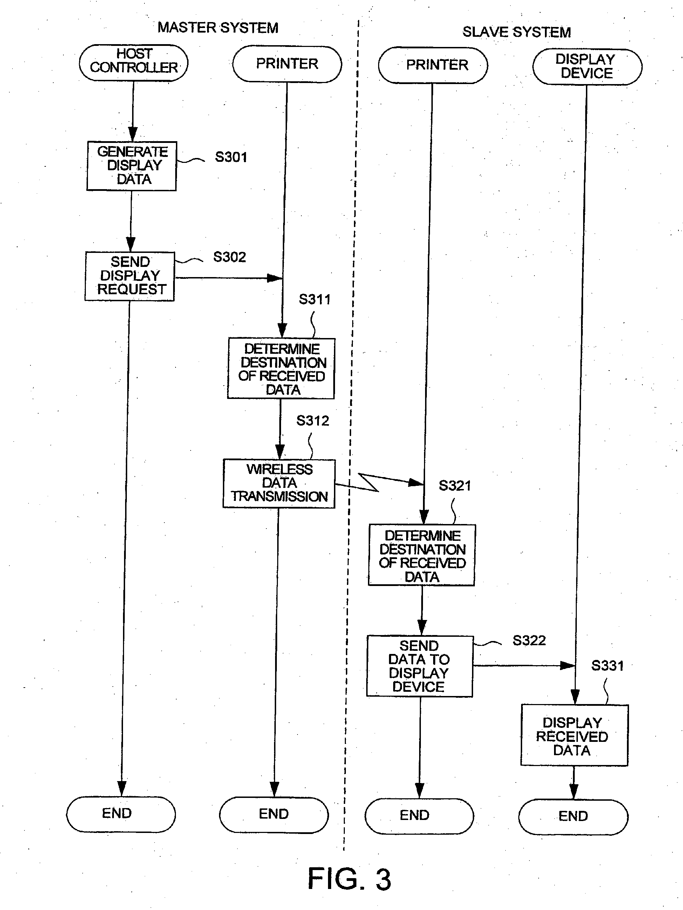

Fig. 3 is a flow chart describing the display process enabling the host controller of a host terminal to present information on the display device of a slave terminal. Operation when a display process instruction is sent from the POS application 2 running on the host controller 110 to the display 122 is described below by way of example.

The POS application 2 executed by host controller 110 first generates the information for display on the display 122 (the display data) (S301), and then sends a display request to the printer 111 (S302).

The data switch unit 215 of the printer 111 then determines where to send the request based on the address (destination) contained in the received data stream and connection data preset for each possible destination (S311). The destination for the display data is the display 122 in slave terminal 102 and slave terminal 102 is connected by means of the WC link. Therefore, data switch unit 215 applies the data stream to the WC module 211 (S312) to have it sent wirelessly to the printer 121.

The data switch unit 225 of the printer 121 then determines where to send the received data stream based on the address in the received data and the connection data preset for each possible destination (S321). The display data is then sent to the display 122, that is, the destination identified by the data switch unit 225 (S322).

The display 122 then displays the display data (S331).

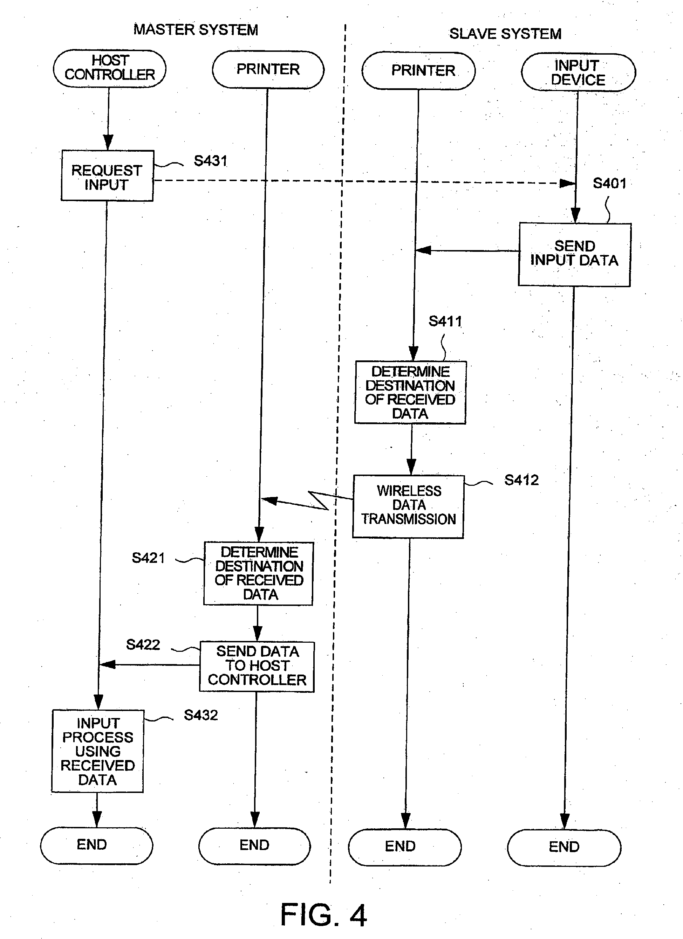

Fig. 4 is a flow chart of a process for sending data entered at the input device 123 of the slave terminal 102 to the host controller 110. Using a transaction process of the POS application 2 running on the host controller 110 based on data input from the input device 123 is described below by way of example.

An input process request to the input device 123 of slave terminal 101 is asserted by the POS application 2 as shown in Fig. 4 (S431).

Input data for the POS application 2 is then input using the input device 123 applied to printer 121 (S401).

The data switch unit 225 of printer 121 then determines where to send the received data based on destination data (the address) that was included in the input process request and the connection data preset for each possible destination of the input data (S411). The input data is then sent to WC module 221, that is, the destination identified by the data switch unit 225 (S412).

The data switch unit 215 of printer 111 then determines where to send the data based on the address in the received data and connection data preset for each possible destination of such data (S421). The input data is then applied, to the selected destination, that is, the wired connection port 212 identified by the data switch unit 215 (S432) and transmitted to host controller 110.

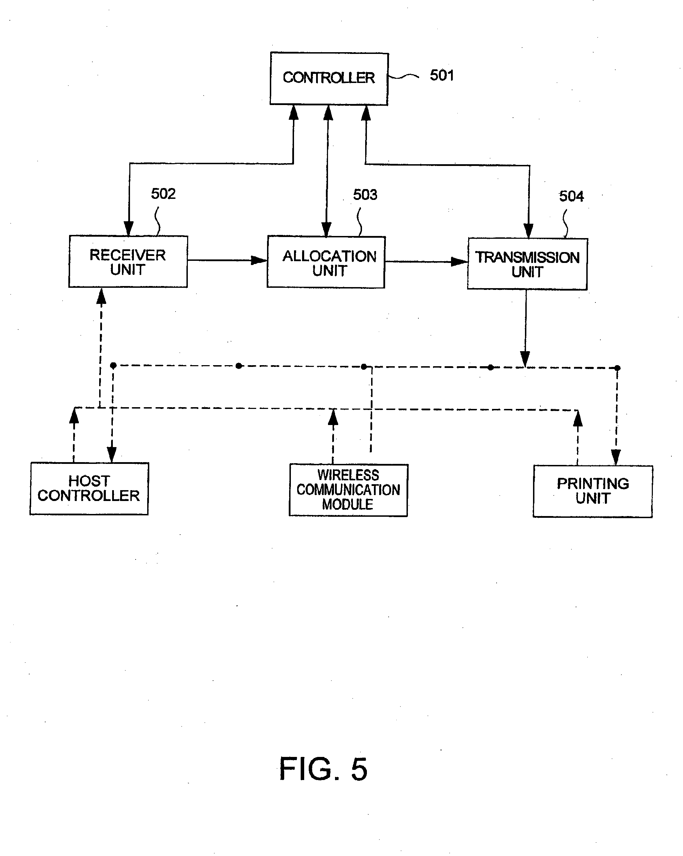

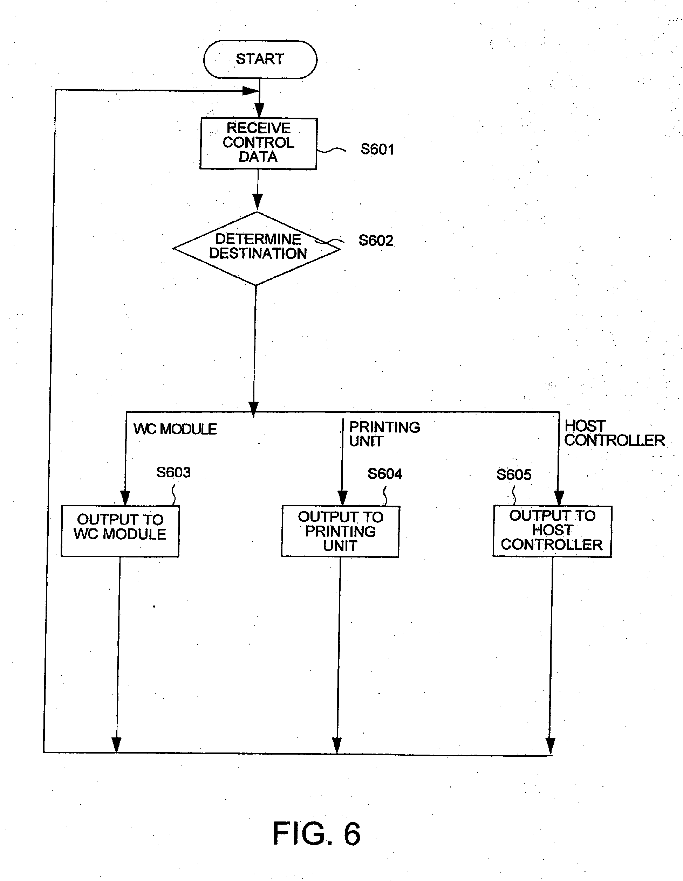

An embodiment of the data switch unit 215 is described next with reference to Fig. 5 and Fig. 6. Fig. 5 is a function block diagram of the data switch unit 215.

As shown in Fig. 5 the data switch unit 215 has a controller 501, receiver unit 502, allocation unit 503, and transmission unit 504. The receiver unit 502 receives data via the physically connected WC module 211 from another WC module 221, receives data from the host controller 110 through wired connection port 212, and receives data from printing unit 214 (e.g. status data). Data that may be received from the WC module 211 may include information about the signal conditions, including signal strength, error rate, and the retransmission request rate of the WC link for display on the display device 112. Based on the address (destination data) in the data received by the receiver unit 502 and connection data preset for each destination, the allocation unit 503 determines whether to send the received data to the host controller 110, WC module 211, or printing unit 214. The transmission unit 504 then sends the data to the destination identified by the allocation unit 503. The controller 501 controls the interaction and operation of the receiver unit 502, allocation unit 503, and transmission unit 504.

Fig. 6 is a flow chart of a control process of the data switch unit.

Data is received from the WC device 211, printing unit 214 or, via port 212, the host controller 110 (S601), and the device to which the received data is to be sent is then determined based on the address in the received data and connection data preset for each destination (S602).

If any device connected via a virtual port, such as the display device 122 or printing unit 224 of slave terminal 102, is the destination (S602: WC MODULE), the received data is output to the WC module (S603). Control then loops back to step S601 and waits for the next data to be received.

If the printing unit is the destination (S602: PRINTING UNIT), the received data is output to the printing unit (S604). Control then loops back to step S601 and waits for the next data to be received.

If the host controller is the destination (S602: PC), the received data is output to the host controller (S605). Control then loops back to step S601 and waits for the next data to be received.

While the description of Figs. 5 and 6 referred to data switch unit 215, it will be appreciated by those skilled in the art that both data switch units 215 and 225 have the same structure and operation and only the devices from which data may be received and to which data may be redirected depends on whether the data switch unit is used in a master terminal or a slave terminal. The printers 215 and 216 may both have the same structure and be interchangeable as is in fact illustrated in Fig. 2.

In a preferred embodiment of the invention the antenna wires 1221 for the WC module 221 are passed inside a metal support pillar 1220 for supporting the display device 122, which is physically connected to the wired connection port 222, and the antenna 1222 for the WC module 221 is disposed on top of the display 122 or on the support pillar 1220.

The display device 122 connected to printer 121 can also display information about the communication status of the WC module received from the data switch unit through the wired connection port.

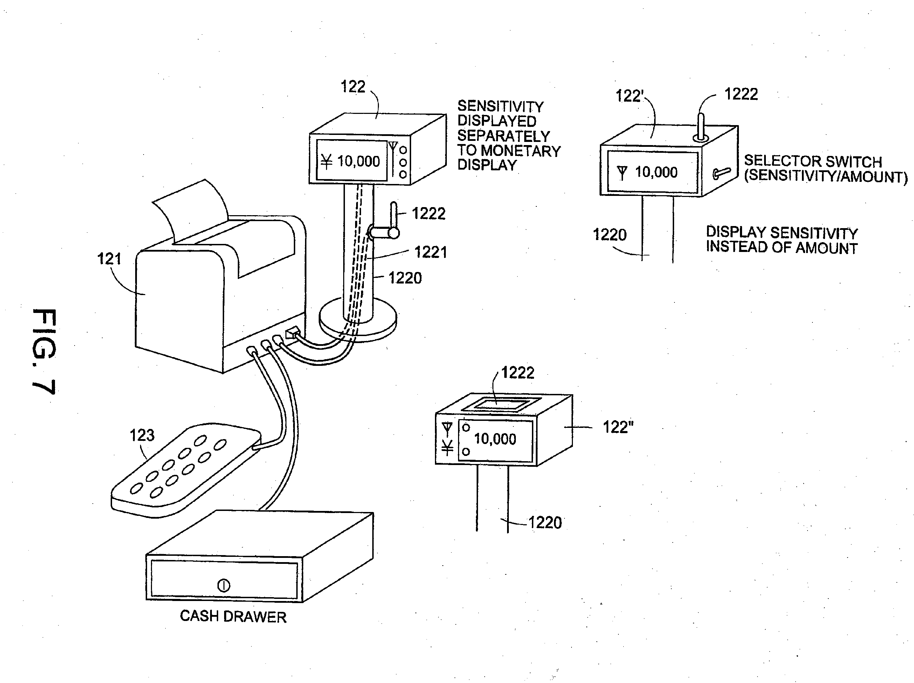

Examples of such displays 122, 122' and 122" are shown in Fig. 7.

The support pillar 1220 holding the display device 122 (122', 122") is made of metal. As shown in Fig. 7 the antenna wires 1221 pass inside the metal pillar and the antenna 1222 for the WC module is disposed somewhere on the pillar or on top of the display device 122'. This reduces signal interference with the POS system and improves noise resistance.

A function for displaying information about the communication status of the WC device, such as whether data is being communicated, if a communication link is established, or if communication is interrupted, and information about the strength of the signal received by the WC device, is also preferably provided on the display device. This makes it possible to move the display device in order to find the best reception condition and thereby determine the best location for the WC module antenna.

As already mentioned above, the data switch unit of a printer according to the present invention can also obtain information about the communication status of the WC module connected to It and output corresponding display data to a display device connected via a wired connection port to the printer as in the slave terminal 102 or the host controller as in the master terminal 101.

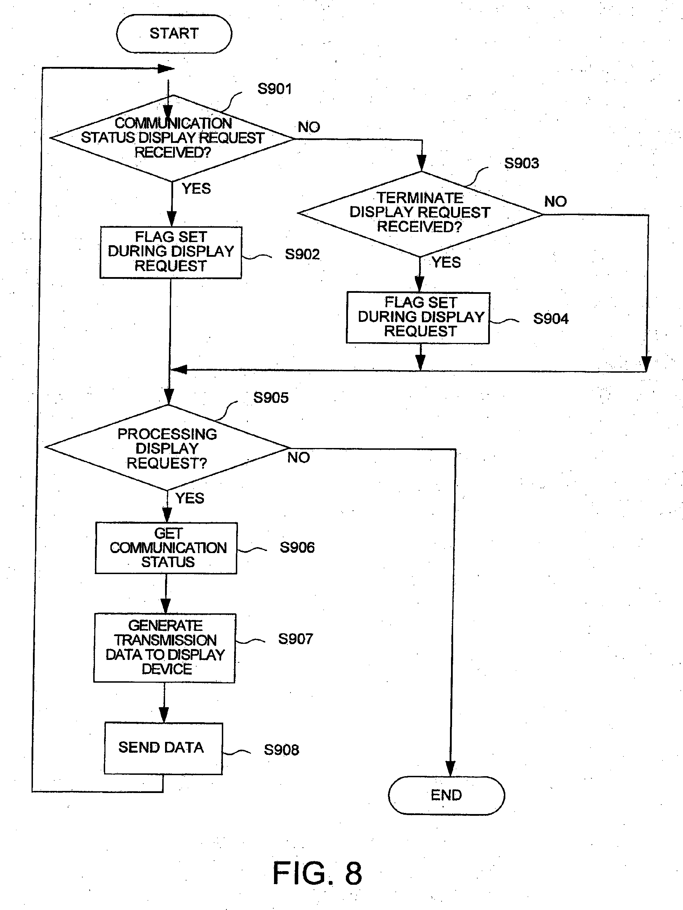

Fig. 8 Is a flow chart of a communication status display process of the data switch.

Whether the received data is a request to display the communication status of the WC module Is first determined (S901). If it is a request to display the communication status (S901: yes), a flag indicating that a communication status display request is being processed is set (S902) and the process advances to step S905. If it is not a request to display the communication status (S901: no), whether the received data is a request to end the WC module communication status display is determined (S903). If it is (S903: yes), the communication status display request flag is reset (S904) and control steps to S905. If the received data is not a request to end the WC module communication status display (S903: no), control steps to S905.

Whether displaying WC module communication status Information is requested is then determined (S905). If it is (S905: yes), the communication status of the WC module is obtained (S906) and status display data is generated based on the detected communication status (S907). The last generated status display data is then sent through the wired connection port to the display device (S908) and the process thereafter repeats at a certain time Interval by returning to step S901. If displaying WC module communication status Information is not requested (S905: no), the process ends.

It should be noted that the communication status display process repeats at a specific time interval in the process shown in the flow chart of Fig. 8, but the data could be displayed only when a display process request is received. Furthermore, WC module communication status could be displayed on the display device connected the host controller 110 instead of on the local display device 122, or the communication status data could be output to a display device (not shown) used only for displaying the communication status.

### Further examples

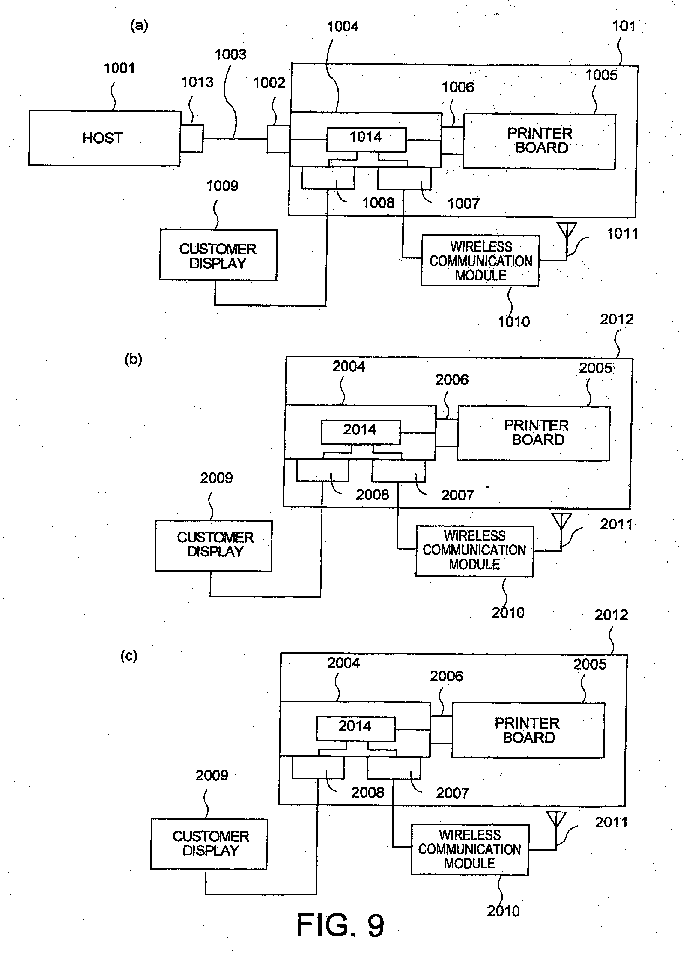

Fig. 9(a) shows a master Interface board 1004 according to the present invention installed in a master POS printer 1012.

This master Interface board 1004 has a WC interface 1007 connected primarily to a WC module 1010, a customer display Interface 1008 connected to a customer display 1009 as needed, a printer interface 1006 connected to a master printer board 1005 driving the POS master printer 1012, and a host interface 1002 connected by wire 1003 to a host computer 1001 through a COM port 1013 of the host computer 1001.

Data received from the host computer 1001 is redirected by mainly a switch unit 1014 based on the destination of the received data through the WC interface 1007 to the WC module 1010, through the printer interface 1006 to the master printer board 1005, or through the customer display interface 1008 to the customer display 1009.

Fig. 9(b) shows a slave interface board 2004 according to the present invention connected to slave POS printer 2012. This slave interface board 2004 enables wireless communication with the WC module 1010 of master interface board 1004 through antennas 1011 and 2011. Unlike the master interface board 1004 described above, it is not necessary to provide a host interface 1002 for connecting to a host computer.

Data received by the second WC module 2010 from the WC module 1010 is redirected by switch unit 2014 based on the destination of the received data through printer interface 2006 to printer board 2005 of slave printer 2012, or through customer display interface 2008 to customer display 2009.

By providing multiple slave POS printers and slave interface boards as shown in Fig. 9(b) arranged as shown in Fig. 9(b) or 9(c), it is possible to add multiple POS printers not requiring a wired connection to the host PC.

As will be appreciated from the present example of the invention multiple POS printers 1012, 2012 can be connected to a single host computer 1001. Furthermore, if one COM port 1013 can be physically connected to a wired connection port of the host computer 1001, multiple POS printers 1012, 2012 can be controlled through a master interface board 1004 connected to the COM port even if the number of COM ports on the host computer 1001 is limited and there are not enough physical connections for all of the desired devices.

The multiple POS printers 1012, 2012 can also be controlled by the WC module 1010 through the interface board 1004 even if the host computer 1001 itself does not have a WC function.

This makes it possible to, for example, eliminate the personal computer component of the individual sales registers and use printer registers. The devices connected to the personal computer (such as a bar code reader) can be connected to the interface board 2004. A bar coder reader interface can be provided in the interface board 2004 in order to use the device as a bar code reader. In this case the host PC runs a POS application program compatible with servicing multiple registers. The host PC typically features power data processing capabilities, and can provide a multitasking operating environment for serving multiple printer registers.

The printer registers can also be more freely located because they communicate wirelessly.

When WC is used to reconfigure a POS system, WC can be achieved without changing the configuration of the host controller of the existing POS terminal systems by replacing printers physically connected to the host controller of the POS terminal system with a printer having a first WC device. In addition, by providing a printer having a second WC module in the add-on POS terminal systems, control requests from the host controller of the existing POS terminal system can be run on the add-on POS terminal systems. It is also not necessary to use a new host controller to build the add-on POS terminal systems, and the existing host controller can be used.

It is therefore easy to reconfigure a POS system and reduce the reconfiguration cost.

Noise interference can also be reduced by disposing the antenna wires of the WC module in the metal support pillar of the POS terminal system display device, and disposing the antenna itself on top of the display device or on the pillar. The best location for the antenna of the WC device, that is, where reception is best, can also be found by further displaying the communication status of the WC module on the display device.

Although the present invention has been described in connection with the preferred embodiment thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A POS system comprising:
a master POS terminal (101) having a host controller (110) for executing one or more POS application programs, and a master printer (111) to be controlled by and physically connected to the host controller by way of a first input/output unit (212), the master printer (111) having a master communication unit (211), a master printing unit (214), and a master data switch unit (215); and
a slave POS terminal (102) with a slave printer (121) having a slave communication unit (221) and a slave printing unit (224), the master printer and the slave printer being adapted to allow control of the slave printer by said host controller through communication via the master printer,
wherein said master-data switch unit (215) is adapted to direct data received from the host controller (110) to said master communication unit (211) or to said master printing unit (214),
**characterized in that**
said master communication unit (211) and said slave communication unit (221) are wireless communication units; and
said master data switch unit (215) comprises control means (501-503) adapted to receive data from any of said first input/output unit (212), said master wireless communication unit (211) and said master printing unit (214), to detect destination data among said received data and to redirect the received data to any of said input/output unit, said master wireless communication unit and said master printing unit in response to said destination data.

2. The system of claim 1, wherein said master and slave wireless communication units (211, 221) have a transmission/reception range of no more than 10 m.

3. The system of any one of the preceding claims, wherein said slave printer (121) further comprises:
one or more input/output units (222, 223) for a physical connection to an external device (122, 123); and
a slave data switch unit (225);
wherein said slave data switch unit (215) comprises control means (501-503) for receiving data from any of said input/output units (222, 223), said slave wireless communication unit (221) and said slave printing unit (224), for detecting destination data among said received data and for redirecting the received data to any of said input/output units (222, 223), said slave wireless communication unit and said slave printing unit (224) in response to said destination data.

4. The system of claim 3, further comprising a display device (122) and/or an input device (123) physically connected to a respective one of said input/output units (222, 223) of the slave printer.

5. The system of claim 4, wherein the display device (122, 122', 122") is supported by a pillar (1220) made of metal, the antenna (1222) for said slave wireless communication unit (221) is disposed on top of the display device or on the pillar, and the wiring for interconnecting said antenna and said slave wireless communication unit is provided inside the pillar.

6. The system of claim 5, wherein the slave data switch unit is adapted to obtain communication status information for the slave wireless communication unit and cause the display device (122, 122', 122") to display the communication status information.

7. The system of any one of the preceding claims wherein said master terminal further comprises a display device (113) supported by a pillar (1220) made of metal, the antenna (1222) for said master wireless communication unit (211) is disposed on top of the display device or on the pillar, and the wiring for interconnecting said antenna and said master wireless communication unit is provided inside the pillar.

8. The system of any one of the preceding claims, wherein the host controller (110) comprises a virtual port emulation unit defining one ore more virtual ports (COM4-COM6) through which said one or more POS application programs can access wirelessly said slave printer (121) and/or any external device (122, 123) connected to the slave printer via said input/output unit (212) and which is adapted to add destination data based on predefined connection data for the respective device to the data to be sent to and to a request for input data from the respective device (121-123).

## Patentansprüche

1. POS-System, umfassend:
ein POS-Hauptterminal (101) mit einer Host-Steuerung (110) zum Ausführen eines oder mehrerer POS-Anwendungsprogramme, und einen von der Host-Steuerung zu steuernden und mit der Host-Steuerung physisch durch eine erste Eingabe/Ausgabeeinheit (212) verbundenen Hauptdrucker (111), wobei der Hauptdrucker (111) eine Haupt-Kommunikationseinheit (211), eine Haupt-Druckereinheit (214) und eine Haupt-Datenschaltereinheit (215) aufweist; und
ein POS-Nebenterminal (102) mit einem Nebendrucker (121), der eine Neben-Kommunikationseinheit (221) und eine Neben-Druckereinheit (224) aufweist, wobei der Hauptdrucker und der Nebendrucker dazu eingerichtet sind, die Steuerung des Nebendruckers durch die Host-Steuerung durch Kommunikation über den Hauptdrucker zu ermöglichen,
wobei die Haupt-Datenschaltereinheit (215) dazu eingerichtet ist, die von der Host-Steuerung (110) empfangenen Daten an die Haupt-Kommunikationseinheit (211) oder die Haupt-Druckereinheit (214) zu leiten,
**dadurch gekennzeichnet, dass**
die Haupt-Kommunikationseinheit (211) und die Neben-Kommunikationseinheit (221) drahtlose Kommunikationseinheiten sind; und
die Haupt-Datenschaltereinheit (215) Steuerungsmittel (501-503) umfasst, die dazu eingerichtet sind, Daten von einer der ersten Eingabe/Ausgabeeinheit (212), der drahtlosen Haupt-Kommunikationseinheit (211) und der Haupt-Druckereinheit (214) zu empfangen, Zieldaten unter den empfangenen Daten zu erkennen und die empfangenen Daten zu einer von der Eingabe/Ausgabeeinheit, der drahtlosen Haupt-Kommunikationseinheit und der Haupt-Druckereinheit als Antwort auf die Zieldaten umzuleiten.

2. System nach Anspruch 1, wobei die drahtlosen Haupt- und Neben-Kommunikationseinheiten (211, 221) einen Sende/Empfangsbereich von höchstens 10 m aufweisen.

3. System nach einem der vorhergehenden Ansprüche, wobei der Nebendrucker (121) ferner umfasst:
eine oder mehrere Eingabe/Ausgabeeinheiten (222, 223) für eine physische Verbindung mit einer externen Vorrichtung (122, 123); und
eine Neben-Datenschaltereinheit (225);
wobei die Neben-Datenschaltereinheit (215) Steuermittel (501-503) zum Empfangen von Daten von einer von den Eingabe/Ausgabeeinheiten (222, 223), der drahtlosen Neben-Kommunikationseinheit (221) und der Neben-Druckereinheit (224), zum Erkennen von Zieldaten unter den empfangenen Daten und zum Umleiten der empfangenen Daten an eine von den Eingabe/Ausgabeeinheiten (222, 223), der drahtlosen Neben-Kommunikationseinheit und der Neben-Druckereinheit (224) als Antwort auf die Zieldaten umfasst.

4. System nach Anspruch 3, ferner umfassend eine Anzeigevorrichtung (122) und/oder eine Eingabevorrichtung (123), die physisch mit einer jeweiligen der Eingabe/Ausgabeeinheiten (222, 223) des Nebendruckers verbunden sind.

5. System nach Anspruch 4, wobei die Anzeigevorrichtung (122, 122', 122") durch einen Pfosten (1220) aus Metall getragen wird, die Antenne (1222) für die drahtlose Neben-Kommunikationseinheit (221) auf der Oberseite der Anzeigevorrichtung oder auf dem Pfosten angeordnet ist und die Verdrahtung zum Verbinden der Antenne mit der drahtlosen Neben-Kommunikationseinheit im Innern des Pfostens vorgesehen ist.

6. System nach Anspruch 5, wobei die Neben-Datenschaltereinheit dazu eingerichtet ist, Kommunikationsstatusinformationen für die drahtlose Neben-Kommunikationseinheit zu erhalten und zu bewirken, dass die Anzeigevorrichtung (122, 122', 122") die Kommunikationsstatusinformationen anzeigt.

7. System nach einem der vorhergehenden Ansprüche, wobei das Hauptterminal ferner eine Anzeigevorrichtung (113) umfasst, die durch einen Pfosten (1220) aus Metall getragen wird, die Antenne (1222) für die drahtlose Haupt-Kommunikationseinheit (211) auf der Oberseite der Anzeigevorrichtung oder auf dem Pfosten angeordnet ist, und die Verdrahtung zum Verbinden der Antenne mit der drahtlosen Haupt-Kommunikationseinheit im Innern des Pfostens vorgesehen ist.

8. System nach einem der vorhergehenden Ansprüche, wobei die Host-Steuerung (110) eine virtuelle Port-Emulationseinheit umfasst, die eine oder mehrere virtuelle Ports (COM4-COM6) definiert, durch die das eine oder die mehreren POS-Anwendungsprogramme drahtlos auf den Nebendrucker (121) und/oder eine beliebige über die Eingabe/Ausgabeeinheit (212) mit dem Nebendrucker verbundene externe Vorrichtung (122, 123) Zugriff haben, und die dazu eingerichtet ist, Zieldaten basierend auf vordefinierten Verbindungsdaten für die jeweilige Vorrichtung zu den zu der jeweiligen Vorrichtung (121-123) zu sendenden Daten und zu einer Anfrage für Eingabedaten von der jeweiligen Vorrichtung hinzufügen.

## Revendications

1. Système POS comprenant :
un terminal POS maître (101) présentant un contrôleur hôte (110) pour exécuter un ou plusieurs programmes d'application POS, et une imprimante maître (111) devant être contrôlée par un contrôleur hôte et connecté physiquement à celui-ci au moyen d'une première unité d'entrée/sortie (212), l'imprimante maître (111) présentant une unité de communication maître (211), une unité d'impression maître (214) et une unité de commutation de données maître (215) ; et
un terminal POS esclave (102) avec une imprimante esclave (121) présentant une unité de communication esclave (221) et une unité d'impression esclave (224), l'imprimante maître et l'imprimante esclave étant adaptées pour permettre le contrôle de l'imprimante esclave par ledit contrôleur hôte grâce à une communication par l'intermédiaire de l'imprimante maître,
dans lequel ladite unité de commutation de données maître (215) est adaptée pour diriger des données provenant du contrôleur hôte (110) vers ladite unité de communication maître (211) ou ladite unité d'impression maître (214),
**caractérisé en ce que**
ladite unité de communication maître (211) et ladite unité de communication esclave (221) sont des unités de communication sans fil ; et
ladite unité de commutation de données maître (215) comprend des moyens de contrôle (501 à 503) adaptés pour recevoir des données à partir de l'une quelconque parmi ladite première unité d'entrée/sortie (212), ladite unité de communication sans fil maître (211) et ladite unité d'impression maître (214), pour détecter des données de destination parmi lesdites données reçues et pour rediriger les données reçues vers l'une quelconque parmi ladite unité d'entrée/sortie, ladite unité de communication sans fil maître et ladite unité d'impression maître en réponse auxdites données de destination.

2. Système selon la revendication 1, dans lequel lesdites unités de communication sans fil maître et esclave (211, 221) présentent une portée de transmission/réception de 10 m maximum.

3. Système selon l'une quelconque des revendications précédentes, dans lequel ladite imprimante esclave (121) comprend en outre :
une ou plusieurs unités d'entrée/sortie (222, 223) pour une connexion physique à un dispositif externe (122, 123) ; et
une unité de commutation de données esclave (225) ;
dans lequel ladite unité de commutation de données esclave (215) comprend des moyens de contrôle (501 à 503) pour recevoir des données à partir de l'une quelconque parmi lesdites unités d'entrée/sortie (222, 223), ladite unité de communication sans fil esclave (221) et ladite unité d'impression esclave (224) pour détecter des données de destination parmi lesdites données reçues et pour rediriger les données reçues vers l'une quelconque parmi lesdites unités d'entrée/sortie (222, 223), ladite unité de communication sans fil esclave et ladite unité d'impression esclave (224) en réponse auxdites données de destination.

4. Système selon la revendication 3, comprenant en outre un dispositif d'affichage (122) et/ou un dispositif d'entrée (123) physiquement connecté(s) à une unité respective parmi lesdites unités d'entrée/sortie (222, 223) de l'imprimante esclave.

5. Système selon la revendication 4, dans lequel le dispositif d'affichage (122, 122', 122") est soutenu par un montant (1220) en métal, l'antenne (1222) pour ladite unité de communication sans fil esclave (221) est disposée au-dessus du dispositif d'affichage ou sur le montant, et le câblage d'interconnexion de ladite antenne et de ladite unité de communication sans fil esclave est prévu à l'intérieur du montant.

6. Système selon la revendication 5, dans lequel l'unité de commutation de données esclave est adaptée pour obtenir des informations d'état de communication pour l'unité de communication sans fil esclave et pour entraîner l'affichage par le dispositif d'affichage (122, 122', 122") des informations d'état de communication.

7. Système selon l'une quelconque des revendications précédentes dans lequel ledit terminal maître comprend en outre un dispositif d'affichage (113) soutenu par un montant (1220) en métal, l'antenne (1222) pour ladite unité de communication sans fil maître (211) est disposée au-dessus du dispositif d'affichage ou sur le montant, et le câblage d'interconnexion de ladite antenne et de ladite unité de communication sans fil maître est prévu à l'intérieur du montant.

8. Système selon l'une quelconque des revendications précédentes, dans lequel le contrôleur hôte (110) comprend une unité d'émulation de port virtuel définissant un ou plusieurs ports virtuels (COM4 à COM6) à travers lesquels ledit ou lesdits programmes d'application POS peut/peuvent accéder au moyen d'une connexion sans fil à ladite imprimante esclave (121) et/ou un quelconque dispositif extérieur (122, 123) connecté à l'imprimante esclave par l'intermédiaire de ladite unité d'entrée/sortie (212) et qui est adapté pour ajouter des données de destination sur la base de données de connexion prédéfinies pour le dispositif respectif aux données à envoyer et à une demande de données d'entrée provenant du dispositif respectif (121 à 123).
